# EUROPEAN PATENT APPLICATION

(11) **EP 1 990 850 A1**
(43) Date of publication of application: **12.11.2008**
(21) Application number: 07737757.0
(22) Date of filing: 27.02.2007
(51) Int. Cl.: H01M 4/58, H01M 4/02, H01M 10/40

(54) **CARBON MATERIAL FOR LITHIUM BATTERY, AND LITHIUM BATTERY**

(30) Priority: 02.03.2006 JP 2006056581
(71) Applicant: Cataler Corporation, Shizuoka-ken 437-1492 (JP)
(72) Inventor: YANAGI, Kazuaki, Kakegawa-shi, Shizuoka 437-1492 (JP); KUME, Tetsuya, Kakegawa-shi, Shizuoka 437-1492 (JP); HIGAONNA, Yasuyuki, Kakegawa-shi, Shizuoka 437-1492 (JP)
(74) Representative: TBK-Patent
(86) International application number: PCT/JP2007/054147
(87) International publication number: WO 2007/100133

(57) **Abstract**

To provide a carbon material from which lithium battery whose discharge capacity is large and which is good in terms of output characteristic is obtainable.

A carbon material according to the present invention for lithium battery is **characterized in that** a BET specific surface areas is 10-1,000 m²/g; a carbon interlayer distance is 0.350-0.380 nm; and a carbon intensity is 2,000 cps or more. In the carbon material according to the present invention for lithium battery, a high output and a low retention are obtainable when forming lithium battery.

## Description

### TECHNICAL FIELD

The present invention relates to a carbon material for lithium battery and a lithium battery using this carbon material; more particularly it relates to a carbon material, which can be used suitably for obtaining lithium battery that is good in terms of output characteristic, and to a lithiumbattery in which this carbon material is contained in the negative-electrode active material.

### BACKGROUND ART

In the fields of communication devices and information-related devices, as being accompanied by downsizing cellular phones, notebook personal computers, and the like, lithium secondary batteries have been put into practical use due to the reason that they are of high energy density, and have come to be used widely.

Meanwhile, in the field of automobiles, because of the environmental problems such as the air pollutions and the increment of carbon dioxide, the developments of hybrid automobiles that utilize engine and electricity as a source of power, and the developments of electric cars that utilize electricity as a source of power have been underway. As an electric-power source for such vehicles, it has been investigated to use lithium secondary batteries.

In lithium secondary batteries, it is a general construction that uses an organic-solvent system electrolytic solution in which a lithium salt is dissolved in an organic solvent, and that uses a carbon material, which is capable of absorbing/releasing lithium ions, as a negative-electrode active material.

In Japanese Unexamined Patent Publication (KOKAI) Gazette No. 8-106,901, a nonaqueous secondary battery is disclosed, nonaqueous secondary battery whose retention is made small and whose capacity is made high by forming a protective layer including fluorine on the surface of a carbon material in a nonaqueous secondary battery using the carbon material for a negative electrode. And, in Patent Literature No. 1, using a carbon material whose carbon interlayer distance between the (002) planes (d₀₀₂) is 0.335-0.350 nm is disclosed.

In Japanese Unexamined Patent Publication (KOKAI) Gazette No. 2001-216,962, a lithium secondary battery is disclosed, lithium secondary battery whose discharge capacity is made large and whose cyclic characteristic is made good by having lithium titanium composite oxide as a negative-electrode active material in a carbon material. And, in Patent Literature No. 2, using graphite whose carbon interlayer distance between the (002) planes (d₀₀₂) is 0.34 nm or less; easily-graphitizable carbon whose carbon interlayer distance between the (002) planes (d₀₀₂) is 0.34 nm or more; or hardly-graphitizable carbon whose carbon interlayer distance between the (002) planes (d₀₀₂) is 0.36 nm or more is disclosed.

However, in these carbon materials, there has been such a problem that no sufficient electric output is obtainable.

Further, in the conventional carbon materials, there has been such a characteristic that the current value ascends or descends (fluctuates) sharply with respect to the voltage upon charging/discharging lithium battery. When the current value changes sharply with respect to the voltage, it has become impossible to measure a remaining chargeable/dischargeable capacity (chargeable/dischargeable electric capacity) accurately by the measurement of voltage between the terminals of lithium battery. In this change of current upon charging/discharging, since a cell reaction, which accompanies the intercalation of lithium, occurs on the negative-electrode side of lithium battery, the fluctuation of current has become large with respect to voltage change.

As a method for measuring a remaining chargeable/dischargeable capacity of lithium battery accurately, a remaining-capacity detecting apparatus for secondary battery, which computes a remaining chargeable/dischargeable capacity from a current being detected upon charging/discharging and a duration time of charging/discharging using a microprocessor, is disclosed in Japanese Unexamined Patent Publication (KOKAI) No. 5-333,119.

Moreover, in Japanese Unexamined Patent Publication (KOKAI) No. 2006-29,815, there is a disclosure on: detectinganelectric-power consumption based on the storage voltage and discharge current of battery; and computing a remaining capacity from an equation, which is obtained from experimental results and expresses the relationship between it and the storage voltage of battery.

Further, in Japanese Patent No. 3,483,527, there is a disclosure regarding computing a remaining chargeable/dischargeable capacity from a terminal voltage and a charge/discharge current in electric double layer capacitor.

Thus, in order to detect the remaining chargeable/dischargeable capacities of lithium batteries that are manufactured using the conventional carbon materials, a new detecting apparatus has become necessary.

### DISCLOSURE OF THE INVENTION

The present invention is one which has been done in view of the aforementioned circumstances, and it is an assignment to provide a carbon material from which a lithium battery whose discharge capacity is large and is good in terms of output characteristic is obtainable, and additionally which makes the measurement of the remaining chargeable/dischargeable capacity of lithium battery easy.

[Means for Solving the Assignment]

Focusing on the relationship between the specific surface area of carbon material and the output of battery, and investigating it over and over again have resulted in arriving at completing the present invention.

Specifically, a carbon material according to the present invention for lithium battery is characterized in that a BET specific surface areas is 10-1,000 m²/g; a carbon interlayer distance is 0.350-0.380 nm; and a carbon intensity is 2,000 cps or more.

Moreover, a lithium battery according to the present invention is characterized in that it has a negative-electrode active material including a carbon material whose BET specific surface areas is 10-1,000 m²/g; carbon interlayer distance is 0.350-0.380 nm; and carbon intensity is 2,000 cps or more.

It is preferable that the carbon material can be 10% by mass or more when a mass of entire carbonaceous materials being included in the negative-electrode material is taken as 100% by mass.

### BRIEF DESCRIPTION OF THE DRAWINGS

Fig. 1 is a diagram for illustrating a charge/discharge characteristic of a lithium battery according to Sample No. 2.

Fig. 2 is a diagram for illustrating a charge/discharge characteristic of a lithium battery according to Sample No. 4.

### BEST MODE FOR CARRYING OUT THE INVENTION

Hereinafter, inventions that further embody said invention, and the embodiment modes of these inventions will be explained.

[Embodiment Modes of the Invention]

(Carbon Material)

In a carbon material according to the present invention for lithium battery, a BET specific surface area is 10-1, 000 m²/g. When the aforementioned BET specific surface area becomes less than 10 m²/g, no sufficient battery capacity (high output) becomes obtainable in lithium battery in which such a carbon material is contained in the negative-electrode active material. Although the larger the aforementioned BET specific surface area becomes the more the battery capacity of lithium battery enhances; when the specific surface area surpasses 1,000 m²/g, the specific surface area is too large so that the retention capacity increases in lithium battery, and thereby the discharge capacity decreases. A more preferable BET specific surface area of the carbon material can be 10-100 m²/g. By the fact that the aforementioned BET specific surface area becomes 10-100 m²/g, a high battery capacity, and a low retention capacity are obtainable.

In the carbon material according to the present invention for lithium battery, a carbon interlayer distance is 0.350-0.380 nm. A lithium battery carries out charging/discharging by means of the fact that Li ions are sorbed in and desorbed from carbon in the negative electrode, the carbon interlayer distance of carbon material relates to the readiness of sorbing/desorbing of Li ions. In the carbon material according to the present invention as well, when the carbon interlayer distance between the (002) planes (d₀₀₂) narrows down, the sorbing/desorbing of Li ions becomes less likely to occur so that the internal resistance of lithium battery increases, and thereby the output characteristic has declined. Accordingly, the carbon interlayer distance of the carbon material needs to be 0.350 nm or more. Although the wider the aforementioned carbon interlayer distance becomes the more the internal resistance in lithium battery declines, and thereby the output rises; the upper limit of the carbon interlayer distance needs to be 0.380 nm because the retention capacity of lithium battery has enlarged when it surpasses 0.380 nm. A more preferable carbon interlayer distance of the carbon material can be 0.350-0.360 nm.

The carbon material according to the present invention for lithiumbattery is one whose carbon intensity, a diffraction intensity of the (002) plane in X-ray Diffraction, is 2,000 cps or more. In the carbon material according to the present invention for lithium battery, when it becomes less than 2,000 cps, the denseness diminishes; since no sufficient discharge capacity is obtainable in a lithiumbattery into which such a carbonmaterial is incorporated, the aforementioned value needs to become 2,000 cps or more.

Further, the carbon material according to the present invention for lithium battery makes it possible to accurately detect the remaining chargeable/dischargeable capacity of lithium battery from the voltage and charge/discharge current because each of the carbon interlayer distance and carbon intensity (the crystallinity of carbonaceous material) is controlled. When using a carbon material for the negative electrode of lithium battery, a cell reaction, which accompanies the intercalation of lithium, occurs in the carbon material. Since this cell reaction accompanies the intercalation of lithium, it raises/declines the terminal voltage of lithium battery sharply. On the contrary, in the carbon material according to the present invention for lithium battery, the sudden fluctuation of voltage, which is accompanied by this intercalation reaction, can be suppressed, because the crystallinity is controlled. As a result of this, a lithium battery, which uses the carbon material according to the present invention makes it possible to obtain a remaining battery capacity from the terminal voltage and charge current.

The carbon material according to the present invention for lithium battery can be a carbon material whose BET specific surface area, carbon interlayer distance, and carbon intensity fall in the predetermined ranges, respectively; it is not one whose production method is limited; and it can be produced by carbonizing and activating conventionally-known carbon materials, for instance.

Among them, as for a carbon raw material, it is preferable to use carbon, oil-based pitch or coal-based pitch that has fine crystals being analogous to that of graphite, is amorphous comparatively and is of low orientation, due to the reason that it is likely to form a large specific surface area upon performing an activation treatment to it, and the like. Further, it is preferable to use oil-based pitch that has fine crystals being analogous to that of graphite, from the viewpoint that it is likely to set up the carbon interlayer distance and carbon intensity of the carbon material to values within the predetermined ranges, and so forth.

The orientation of the aforementioned carbon material is not necessarily judged from actually-measured values of the diffraction peak's diffraction intensity and half-value width, but it is preferable to judge it by comparing diffraction peaks relatively. For example, it can be discussed by comparing X-Ray diffraction peaks in the (002) plane relatively. According to the aforementioned analysis method, a diffraction peak, which rises up sharply, is observed in general when being one whose orientation is high (crystallinity is high) like graphite, and a diffraction peak, which rises up obtusely and whose half-value width is wide, is observed in raw material whose orientation is low (crystallinity is low) (to put it differently, which is amorphous). A raw material, which is described in the present invention and which is amorphous and is of low orientation, has an intermediate characteristic between that of the aforementioned raw material being of high orientation and that of the aforementioned raw material being of low orientation; concretely speaking, it can be a raw material which exhibits such a diffraction peak that it rises up more gently than the diffraction peak of graphite does and more sharply than the diffraction peak of those being in complete amorphous state does.

The BET specific surface area of the above-described carbon material can be set up to values within the predetermined range by controlling the activation condition.

The aforementioned carbon material can be used as a positive-electrode material of lithium battery and a negative-electrode material thereof, or a part of them. Among them, by using it as a part of the negative-electrode material, furthermore as a part of a negative-electrode active material thereof, a lithium battery can be obtained, lithium battery which has a high electric capacity and additionally is good in terms of output characteristic, and in which the increment of retention capacity is suppressed. Since the lithium battery according to the present invention has a carbon material whose effect with respect to the retention capacity is great, it is preferable that it can be a lithium secondary battery. Hereinafter, the lithium battery according to the present invention will be explained, lithium battery in which the aforementioned carbon material is contained in a negative-electrode active material.

(Lithium Battery)

In the lithium battery according to the present invention, at least a negative-electrode active material has the aforementioned carbon material for lithium battery. That is, it is allowable that the negative-electrode active material can include any substances other than the aforementioned carbon material for lithium battery. As for the substances other than the aforementioned carbon material for lithium battery, it is possible to use substances that have been used in conventionally known negative-electrode active materials; for example, it is possible to name metallic lithium, carbon materials other than the aforementioned carbon material for lithium battery, transition metal compounds, and the like. It is preferable that the substances other than the aforementioned carbon material for lithium battery can substances, which virtually comprise carbon, such as graphite and cokes-type carbon materials.

When amass of entire carbonaceous materials that are included in the negative-electrode active material are taken as 100% by mass, it is preferable that the carbon material (the aforementioned carbon material for lithium battery) can be 10% by mass or more. Here, the carbonaceous materials specify substances that virtually comprise carbon; concretely speaking, they specify the aforementioned carbon material for lithium battery, and carbon materials other than the aforementioned carbon material for lithium battery. Moreover, the carbonaceous materials do not include any binding agent. Because of the fact that the proportion of the aforementioned carbon material for lithium battery, which occupies in the carbonaceous materials, becomes 10% by mass or more, it turns into a lithium battery which exhibits a high electric capacity and additionally is good in terms of output characteristic, and in which the increment of retention capacity is suppressed. When the proportion of the aforementioned carbon material for lithium battery is less than 10% by mass, the effect of the addition becomes unobtainable. The higher the proportion of the aforementioned carbon material for lithium battery the more preferable it is; being 50% by mass or more is more preferable; and being 90% by mass is much more preferable.

In the lithium battery according to the present invention, the sharp fluctuation of the terminal voltage of lithium battery, which arises when the cell reaction that accompanies the intercalation of lithium occurs, is suppressed; and it is possible to obtain a remaining battery capacity from the terminal voltage and charge/discharge current with ease.

In the lithium battery according to the present invention, materials other than the aforementioned carbon material can be formed of conventionally known materials. For example, it can be manufactured by forming a sheet-shaped positive-electrode plate and a negative-electrode plate; and then accommodating them, which are put in such a state with a separator being interposed therebetween, in a battery container together with an electrolytic solution.

As far as the positive-electrode plate can release lithium ions when charging and can sorb them when discharging, it is not one which is limited with regard to its material construction, and it is possible to use those with conventional material constructions. For example, it is possible to name a positive-electrode plate comprising a lithium foil, or a positive-electrode plate that is completed by coating a mixture agent, which is obtained by mixing a positive-electrode active material, a conductor agent and a binder agent, onto an electricity collector.

For the positive-electrode active material, it is possible to use conventionally known active materials, not being limited in particular with regard to the types of their active materials. For example, it is possible to name such compounds as TiS₂, TiS₃, MoS₃, FeS₂, Li₍₁₋ₓ₎MnO₂, Li₍₁₋ₓ₎Mn₂O₄, Li₍₁₋ₓ₎CoO₂, Li₍₁₋ₓ₎NiO₂ and V₂O₅. Here, "x" specifies 0-1. Moreover, it is allowable as well to use a mixture of these compounds as the positive-electrode active material. In addition, like Li₁₋ₓMn₂₊ₓO₄, LiNi₍₁₋ₓ)CoₓO₂, and so on, it is allowable to adapt those, which is made by replacing a part of the transition metal elements of LiMn₂O₄ and LiNiO₂ with at least one type or more of the other transition metal elements or Li, into the positive-electrode active material.

As for the positive-electrode active material, a composite oxide of lithium and transition metal, such as LiMn₂O₄, LiCoO₂ and LiNiO₂, is more preferable. That is, since they are good in terms of performance as active material, such as being good in terms of the diffusion performance of electrons and lithium ions, batteries, which have a high charge/discharge efficiency and a favorable cyclic characteristic, are obtainable. Further, as for the positive-electrode active material, because of the lowness of material cost, it is preferable to use LiMn₂O₄

The binder agent has a function of connecting and holding up active-material particles. As for the binding agent, an organic system binder agent, or an inorganic system binder agent can be used; for example, it is possible to name such a compound as polyvinylidene fluoride (PVDF), polyvinylindene chloride, and polytetrafluoroethylene (PTFE).

The conductor agent has a function of securing the electric conductivity of positive electrode. As for the conductor agent, it is possible to name one species of carbon substances, such as carbon black, acetylene black and graphite, or those in which two or more species of them are mixed, for instance.

Moreover, as for the positive-electrode electricity collector, it is possible to use a foil, or the like, which is made by processing a metal, such as aluminum and stainless, into a net, punched metal, foamed metal or plate shape, for instance.

As far as the negative-electrode plate can sorb lithium ions when charging and can release them when discharging, it is not one which is limited with regard to its material construction, excepting the fact that the aforementioned carbon material for lithium battery is used in at least a part of the negative-electrode active material; and it is possible to use those with material constructions being known heretofore. In particular, it is preferable to use a negative-electrode plate that is formed by coating a mixture agent, which is obtained by mixing a negative-electrode active material including the aforementioned carbon material for lithium battery and a binder agent, onto an electricity collector.

The binder agent has a function of connecting and holding up active-material particles. As for the binding agent, an organic system binder agent, or an inorganic system binder agent can be used; for example, it is possible to name such a compound as polyvinylidene fluoride (PVDF), polyvinylindene chloride, and polytetrafluoroethylene (PTFE).

As for the negative-electrode electricity collector, it is possible to use a foil, or the like, which is made by processing a metal, such as copper and nickel, into a net, punched metal, foamed metal or plate shape, for instance.

The nonaqueous electrolytic solution can be an electrolytic solution that has been used in ordinary lithium secondary battery, and can be constituted of an electrolytic salt and a nonaqueous solvent.

As for the electrolytic salt, it is possible to name LiPF₆, LiBF₄, LiClO₄, LiAsF₆, LiCl, LiBr, LiCF₃SO₃, LiN(CF₃SO₂)₂, LiC(CF₃SO₂)₃, LiI, LiAlCl₄, NaClO₄, NaBF₄, NaI, and the like, for instance; in particular, it is possible to name an inorganic lithium salt, such as LiPF₆, LiBF₄, LiClO₄ and LiAsF₆, and an organic lithium salt, which can be expressed with LiN(SO₂CₓF₂ₓ₊₁) (SO₂C_{y}F_{2y+1}). Here, "x" and "y" express an integer of 1-4; moreover, x + y is 3-8. Concretely speaking, as for the organic lithium salt, it is possible to name LiN(SO₂CF3)(SO₂C₂F₅), LiN(SO₂CF₃)(SO₂C₃F₇), LiN(SO₂CF₃)(SO₂C₄F₉), LiN(SO₂C₂F₅)(SO₂C₂F₅), LiN(SO₂C₂F₅)(SO₂C₃F₇), LiN(SO₂C₂F₅) (SO₂C₄F₉), and so forth. Among them, when employing LiN(SO₂CF₃)(SO₂C₄F₉), LiN (SO₂C₂F₅)(SO₂C₂F₅), and so on, for an electrolyte, they are preferable because they are good in terms of electric characteristic.

Note that, in this electrolytic salt, it is preferable that it can be dissolved so that a concentration in the electrolytic solution becomes 0.5-2.0 mol/L. In particular, when the concentration in the electrolytic solution becomes less than 0.5 mol/L, no sufficient current density might be obtainable.

As for an organic solvent in which the electrolytic salt dissolves, it is not limited in particular as far as it can be an organic solvent that has been used in ordinary lithium secondary battery; for example, it is possible to name a carbonate compound, a lactone compound, an ether compound, a sulfolane compound, a dioxysolane compound, a keteone compound, a nitrile compound, a halogenated hydrocarbon compound, and the like. Specifically speaking, it is possible to name carbonates, such as dimethyl carbonate, methyethyl carbonate, diethyl carbonate, ethylene carbonate, propylene carbonate, ethylene glycol dimethyl carbonate, propylene glycol dimethyl carbonate, ethylene glycol diethyl carbonate and vinylene carbonate; lactonnes, such as y -butyrolactone; ethers, such as dimethoxyethane, tetrahydrofuran, 2-methyltetrahydrofuran, tetrahydropyran and 1,4-dioxane; sulfolanes, such as sulfolane and 3-methyl sulfolane; dioxysolanes, such as 1,3-dioxysolane; ketones, such as 4-methyl-2-pentanone; nitriles, such as acetnitrile, propionitrile, valeronitrile and benzonitrile; halogenated hydrocarbons, such as 1,2-dichloroethane; and others, such as methylformate, dimethylformamide and dimethyl sulfoxide. Further, it can also be a mixture of these.

Especially, among these organic solvents, one kind or more of nonaqueous solvent, which is selected from the group consisting of carbonates, is preferable, because they are good in the solubility of electrolyte, the dielectric constant and the viscosity.

The lithium battery according to the present invention is not one whose configuration is limited in particular; for example, it can be employed as a battery with a variety of configurations, such sheet types, cointypes, cylindrical types and rectangular types. Preferably, it can be a rolled type electrode assembly in which a positive electrode and a negative electrode are formed as a sheet shape, respectively, and in which they are rolled in such a state with a sheet-shaped separator being interposed therebetween. Further, because of being good in terms of volumetric efficiency, it is more preferable that it can be a flatly-configured and rolled-type electrode assembly.

Regarding a battery container as well in which the electrode assembly of the lithium battery according to the present invention is accommodated, it is not one whose material quality is limited; for example, it is possible to name metals and resins.

The carbon material according to the present for lithium battery demonstrates such an effect that, when a lithium battery is made therefrom, it is possible to obtain a high output while holding the retention to a certain extent or less. Moreover, because of using this carbon material, the lithium battery according to the present invention can demonstrate a high output while holding the retention to a certain extent or less; its discharge capacity is large; and it is good in terms of the output characteristic.

Further, in the carbon material according to the present invention for lithium battery, when a lithium battery is made therefrom, it is possible to detect a remaining chargeable/dischargeable capacity with ease from the terminal voltage and charge/discharge current.

[EXAMPLE]

Hereinafter, the present invention will be explained using an example.

(Production of Carbon Material)

As an example according to the present invention, carbon materials according Sample Nos. 1-6 for lithium battery were produced by a production process being set forth hereinafter.

(Production of Carbon Material for Lithium Battery)

As a raw material, a coal system pitch was prepared, coal system pitch which had a microscopic structure being analogous to graphite, which was amorphous comparatively and which was of low orientation.

And, it was put inside a furnace whose in-furnace atmosphere was adjustable, and was subjected to a temperature increment to a predetermined temperature of 300-500 °C at a temperature increment rate of 5 °C/min under a pressure condition of 0.1-0.5 MPa, and was heated thereafter for 1-5 hours to carry out preliminary carbonization.

Thereafter, following adapting the in-furnace pressure into being a pressure of 0.2 MPa or less, it was subjected to a temperature increment to a predetermined temperature of 700-900 °C at a temperature increment rate of 5 °C/min, and was heated thereafter for 1-5 hours to carry out a carbonization treatment.

After the carbonization treatment, an activation treatment was carried out using an alkali compound (alkali metal hydroxide, or alkali metal carbonate). In the activation treatment, it was held at 700-900 °C (800 °C desirably) for 1-10 hours in such a state that a mass ratio of the carbide to the alkali compound was 1:1-1:5. Here, the atmosphere during the holding was a nitrogen gas atmosphere or a nitrogen gas atmosphere with water vapor mixed.

And, pulverizing was carried out after washing it fully with water, thereby adapting the average grain size into being D50 = 3-30 µm (3-10 µm desirably).

Finally, calcination was carried out at 700-900 °C (800 °C desirably) in a nitrogen atmosphere including hydrogen gas in a proportion of 3-100%, thereby producing carbon materials of Sample Nos. 1-6 according to the present example for lithium battery.

Note that the carbon materials of Sample Nos. 1-6 for lithium battery were produced by changing the aforementioned respective conditions.

Moreover, in the production of the carbon materials for lithium battery, raw-material species "A"-"F" could be produced by preliminary carbonizing the raw-material coal system pitch. The respective raw-material species whose orientations differed to each other could be produced by adjusting the conditions of the preliminary carbonization. The raw-material species "A"-"C" had medium orientations, the raw-material species "D" was dense and had high orientation, and raw-material species "E"-"F" were amorphous and had low orientations. Regarding these orientations, they were determined by relatively comparing the X-ray diffraction peaks of (002) plane. The results are given in Table 1. As for the measurement method, an X-ray diffraction apparatus ("Rint-2500" made by RIGAKU DENKI Co. , Ltd.) was used. The measurement conditions were adapted into being a tube bulb: Cu (K_{α}), a tube voltage: 40 kV, a tube current: 40 mA, and a measurement range: 8-68° .

For example, when being those whose orientations are high (crystallinities are high) like graphite, diffraction peaks having sharp rises are obtainable in general. Here, when comparing the diffraction intensities and half-value widths of the respective raw-material species' (002) planes, in the raw-material species "A"-"C" and "E"-"F," compared with the raw-material species "D," the diffraction intensities of (002) plane became low and the half-value widths became wide, and thereby it was understood that they exhibited broader diffraction peaks. And, when comparing the diffraction intensities and half-value widths of the (002) planes of the raw-material species "A"-"C" with those of raw-material species "E"-"F," in the raw-material species "E"-"F," compared with the raw-material species "A"-"C," the diffraction intensities of (002) plane became low and the half-value widths became wide, and thereby it was understood that they exhibitedmuch broader diffraction peaks. From this, it is possible to say that the raw-material species "A"-"C" were amorphous relatively and were of low orientation. Moreover, also from the fact that there was such a tendency that the carbon interlayer distances became broad and the crystallite thickness became thin, it is possible to say the same thing.

**[TABLE 1]**

| Raw-material Species | Orientation | Sample Name | (002) Plane Carbon Intensity (cps) | (002) Plane Half-value Width | Carbon Interlayer Distance (nm) | Crystallite Thickness/Lc (nm) |
|---|---|---|---|---|---|---|
| A | Relatively Low | Sample No. 1 | 4000 | 5.61 | 0.355 | 1.45 |
| B | | Sample No. 2 | 2800 | 5.63 | 0.360 | 1.44 |
| C | | Sample No. 3 | 2100 | 5.65 | 0.367 | 1.44 |
| D | High | Sample No. 4 | 20000 | 0.26 | 0.340 | 31.0 |
| E | Low | Sample No. 5 | 200 | 6.92 | 0.400 | 1.17 |
| F | | Sample No. 6 | 400 | 6.38 | 0.400 | 1.29 |

The BET specific surface areas, carbon interlayer distances and carbon intensities of the produced carbon materials according to Sample Nos. 1-6 for lithium battery were measured, and the measurement results are given in Table 2.

The BET specific surface areas were measured using a pore-distribution measurement apparatus ("NOVA-3000" made by QUANTACHROME Co., Ltd.), and were computed by means of the BET method. For the carbon interlayer distances and diffraction intensities in (002) surface, an X-ray diffraction apparatus ("Rint-2500" made by RIGAKU DENKI Co., Ltd.) was used. The measurement conditions were adapted into being a tube bulb: Cu(K_{α}), a tube voltage: 40 kV, a tube current: 40 mA, and a measurement range: 8-68° . From the diffraction peaks of (002) plane, the carbon interlayer distances and diffraction intensities in (002) plane were computed.

**[TABLE 2]**

| | BET Specific Surface Area (g/cm²) | Carbon Interlayer Distance (nm) | Carbon Intensity (cps) | Peak Current Position (0.2 mV/s) | Peak Current Position (2.0 mV/s) | Discharge Capacity (mAh/g) | Retention (mAh/g) | Load Rate Characteristic (%) |
|---|---|---|---|---|---|---|---|---|
| Sample No. 1 | 60 | 0.355 | 4000 | 1.1 | 1.2 | 370 | 50 | 70 |
| Sample No. 2 | 230 | 0.360 | 2800 | 1.2 | 1.3 | 350 | 400 | 70 |
| Sample No. 3 | 400 | 0.367 | 2100 | 1.3 | 1.4 | 330 | 50 | 80 |
| Sample No. 4 | 8 | 0.340 | 20000 | 0.3 | 0.5 | 300 | 50 | 35 |
| Sample No. 5 | 1700 | 0.400 | 200 | 1.1 | 1.5 | 190 | 1010 | 75 |
| Sample No. 6 | 800 | 0.400 | 400 | 1.5 | 1.5 | 230 | 630 | 50 |

(Evaluation)

In the present example, first of all, evaluations on the charging/discharging characteristics and output characteristics were carried out with lithium batteries for evaluation, lithium batteries which comprised such a structure that a negative-electrode sheet and a positive electrode were immersed in an electrolytic solution. On this occasion, the concentration of the aforementioned carbon materials was adjusted so that it became 100% by mass by carbon percentage with binder being excluded.

The aforementioned negative-electrode sheet was made in a method being mentioned below. As the negative-electrode active material, the carbon materials according to the above-described respective samples were used, and were vacuum dried (120 °C, and 133 Pa (10⁻³ Torr)). Next, the dried carbon materials and a PVDF binder (#9210 produced by KREHA KAGAKU Co., Ltd.) were weighed out and then collected so that they made a proportion of 9:1 by mass ratio; and N-methylpyrrolidone (NMP) was added thereto as a solvent to adj ust them to a moderate viscosity; and thereafter vacuum kneading was carried out; thereby obtaining slurries. And, the slurries were coated on the both surfaces of an electricity-collector foil being made of copper; and were pressed with a roll-pressing machine, thereby making negative-electrode sheets (the mixture-agent layer's thickness: t = 50 µm) which comprised a 20 × 20 mm square being provided with the negative-electrode active materials.

For the positive electrodes, a lithium foil whose thickness was 0.4 mm was used.

The electrolytic solution was prepared by dissolving LiPF₆ (the after-dissolving concentration: 1 mol/L) in a mixed solvent of ethylene carbonate and diethyl carbonate (1:1 by mass ratio).

The evaluation of the charge/discharge characteristics were judged from the capacity characteristics in charging/discharging after carrying out charging/discharging under a potential difference of 0.01-1.5 V at a constant current of 0.2 mA/cm², a sufficiently low current. The obtained measurement results are given in Table 2.

The evaluation of the output characteristics were judged from the load rate characteristics. Specifically, the discharging capacities were measured at potential sweeping rates of 0.2 mV/s and 2 mV/s using a cyclic voltammetry, and the load rate characteristics were found from their ratios. That is, a discharge capacity when being swept at a potential sweeping rate of 0.2 mV/s was taken as 100%, and a ratio (%) of another discharge capacity when being swept at a potential sweeping rate of 2 mV/s to the above discharge capacity was taken as a load rate characteristic. The obtained measurement results are given in Table 2 all together.

As given in Table 2, it is understood that, in the lithium batteries in which the carbon materials according to Sample Nos. 1-3 whose BET specific surface areas, carbon interlayer distances and carbon intensities fell respectively within the predetermined ranges were used, the charge capacities and discharge capacities were high (the retentions were small), and they were good in terms of the battery outputs. Especially, in the lithium battery in which the carbon material according to Sample No. 1, such a small retention as 50 mAh/g and such a high load rate characteristic as 70% were obtainable.

In the lithium battery according to Sample No. 4 whose value of the carbon intensity fell within the predetermined range but whose values of the BET specific surface area and carbon interlayer distance were small, a small retention, which was approximately on par with that of Sample No. 1, was obtainable, though the load rate characteristic became as considerably low as 35%.

In the lithium battery in which Sample No. 5 whose values of the BET specific surface area and carbon interlayer distance were greater that the predetermined ranges and whose value of the carbon intensity was small, such a high output that the load rate characteristic was 75% was obtainable, though the retention became such a considerably high value as 1,010 mAh/g.

In the lithium battery according to Sample No. 6 whose value of the BET specific surface area fell in the predetermined range, but whose carbon interlayer distance was great and whose carbon intensity was small, although the retention became 630 mAh/g, the load rate characteristic was no more than 50%.

In short, it is understood that a lithium battery in which a carbon material whose BET specific surface area, carbon interlayer distance and carbon intensity fall respectively within the predetermined ranges is used has a small retention, a high load rate characteristic and a high output. And, it is understood that these high performances result from the carbon materials that are used as the negative-electrode active material, and it is understood that a carbon material whose BET specific surface area, carbon interlayer distance and carbon intensity fall respectively within the predetermined ranges demonstrates these effects.

Further, with lithium batteries for evaluation that were manufactured in the same manner as the aforementioned lithium batteries for evaluation except that the negative-electrode active materials were prepared by mixing the carbon materials according to Sample No. 1 and Sample No. 4 in proportions being given in Table 3, an evaluation of the charge/discharge characteristics and output characteristics was carried out. The measurement results are given in Table 3 all together.

**[TABLE 3]**

| Mass Ratio in Negative Electrode (% by mass) | | | | Charge Capacity (mAh/g) | Discharge Capacity (mAh/g) | Retention (mAh/g) | Load Rate Characteristic (%) |
|---|---|---|---|---|---|---|---|
| Sample No. 1 | Sample No. 4 | Binder | Proportion of Sample No. 1 | | | | |
| 90.0 | 0.0 | 10 | 100 | 420 | 370 | 50 | 70 |
| 45.0 | 45.0 | 10 | 50 | 385 | 335 | 50 | 50 |
| 18.0 | 72.0 | 10 | 20 | 365 | 315 | 50 | 40 |
| 9.0 | 81.0 | 10 | 10 | 360 | 310 | 50 | 40 |
| 4.5 | 85.5 | 10 | 5 | 350 | 300 | 50 | 35 |
| 0.0 | 90.0 | 10 | 0 | 350 | 300 | 50 | 35 |

As being given in Table 3, it is understood that, although all of the batteries for evaluation showed such a low retention as 50 mAh/g, the charge capacity, discharge capacity and load rate characteristic rose as the proportion of the carbonmaterial according to Sample No. 1 increased. That is, by the fact that the negative-electrode active material includes a carbon material whose BET specific surface area, carbon interlayer distance and carbon intensity fall respectively in the predetermined ranges, the charge/discharge characteristic and load rate characteristic improve. And, by the fact that the carbon percentage, which Sample No. 1 accounts for in the negative-electrode material excepting the binder, becomes 50% by mass or more, a lithium battery turns out to be especially good in terms of the charge/discharge characteristic and load rate characteristic.

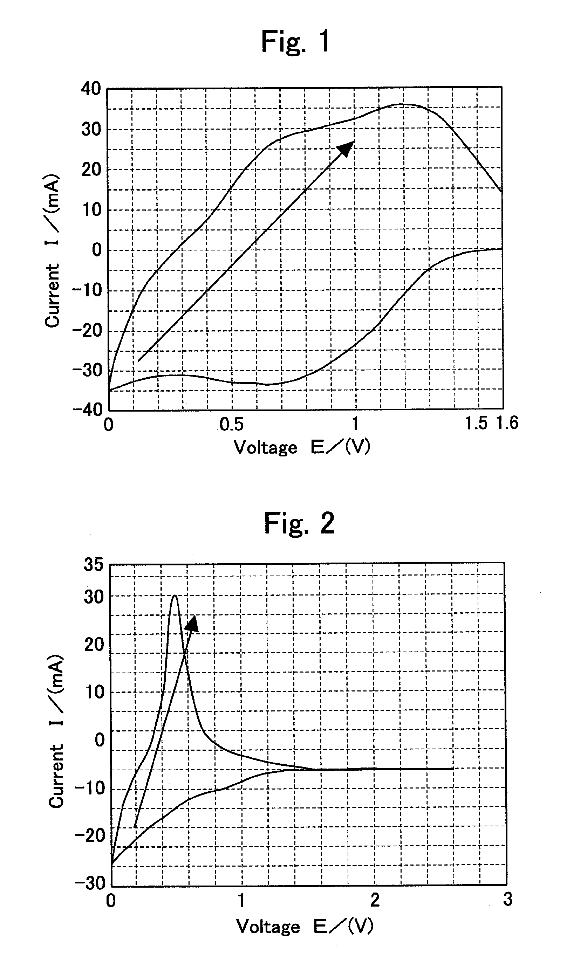

Moreover, as the charge/discharge characteristics of lithium batteries using the carbon materials according to Sample No. 2 and Sample No. 4, the voltages between terminals, and the charge/discharge currents were measured, and are illustrated in Figs. 1-2. Note that, in Figs. 1-2, the measurement results of the respective voltages and currents at the time of charging and those at the time of discharging are illustrated, the arrows in the diagrams specify the changes of the currents and voltages at the time of charging.

As shown in Fig. 1, it is understood that, in the lithium battery in which the carbon material whose BET specific surface area, carbon interlayer distance and carbon intensity fell respectively in the predetermined ranges was used, the voltage between terminals, and the charging current had a first-order relationship (the relationship along the arrow in the diagram). Moreover, it is understood that, with respect to the change of the voltage, the charging current changed gently (the slope of the arrow in the diagram is gentle). Because of this, it is possible to compute a remaining chargeable capacity easily from the voltage and charging current.

On the other hand, it is understood that, in the lithium battery in which the carbon material according to Sample No. 4 whose BET specific surface area was smaller and carbon interlayer distance was shorter was used, the charging current changed sharply with respect to the change of the voltage. Concretely speaking, as being accompanied by the rise of the voltage, the changing current made a sharp drop after it had risen sharply. In the lithium battery according to this example, it was impossible to compute a remaining chargeable capacity easily from the voltage and charging current due to the sharp change of the charging current.

As aforementioned, in the lithium battery according to Sample No. 2 in which the carbon material whose BET specific surface area, carbon interlayer distance and carbon intensity fell respectively in the predetermined ranges was used, it was possible to compute a remaining chargeable capacity (and a charged capacity) easily from the voltage between terminals and charging current.

In the present specification, although the results on the lithium batteries for evaluation, lithium batteries which comprised the aforementioned constructions, , have been set forth, similar results were obtained in lithium batteries that were manufactured by a method being mentioned below. The lithium batteries were made by: sandwiching a separator, which comprised a porous membrane being made from polypropylene, in between one, which was made by drying a positive-electrode sheet being prepared by the following method and the above-described negative-electrode sheets; vacuum impregnating them with the above-described electrolytic solution within a glove box; and thereafter pinching them all together with a polypropylene jig for the exclusive use.

The aforementioned positive-electrode sheet was made by the following method. First of all, as the positive-electrode active material, LiNiO₂ was vacuum dried (120 °C, and 133 Pa (10⁻³ Torr)). And, the dried LiNiO₂, carbon black for conductive auxiliary agent (VURCAN-XC72R produced by CABOT Co., Ltd.) and a PVDF binder (#9210 produced by KREHA KAGAKU Co. , Ltd.) were weighed out and then collected (70:25:5 by mass ratio); and N-methylpyrrolidone (NMP) was added thereto as a solvent to adjust them to a moderate viscosity; and thereafter vacuum kneading was carried out; thereby obtaining a slurry. And, the slurry was coated on the both surfaces of an electricity-collector foil being made of aluminum; and was pressed with a roll-pressing machine, thereby making a positive-electrode sheet (themixture-agent layer's thickness: t = 50 µm) which comprised a 20 × 20 mm square being provided with the positive-electrode active material.

## Claims

1. A carbon material for lithium battery, the carbon material being **characterized in that** a BET specific surface areas is 10-1,000 m²/g; a carbon interlayer distance is 0.350-0.380 nm; and a carbon intensity is 2,000 cps or more.

2. A lithium battery being **characterized in that** it has a negative-electrode active material including a carbon material whose BET specific surface areas is 10-1,000 m²/g; carbon interlayer distance is 0.350-0.380 nm; and carbon intensity is 2,000 cps or more.

3. The lithium battery being set forth in claim 2, wherein said carbon material is 10% by mass ormore when a mass of entire carbonaceous materials being included in said negative-electrode material is taken as 100% by mass.
